# EUROPEAN PATENT APPLICATION

(11) **EP 3 617 062 A1**
(43) Date of publication of application: **04.03.2020**
(21) Application number: 18789997.6
(22) Date of filing: 19.04.2018
(51) Int. Cl.: B64C 23/06

(54) **AERODYNAMIC SURFACE OF AN AIRCRAFT**

(30) Priority: 25.04.2017 RU 2017114385
(71) Applicant: Nizov, Sergei Nikolaevich, Orel 302016 (RU)
(72) Inventor: Nizov, Sergei Nikolaevich, Orel 302016 (RU)
(74) Representative: Tergau & Walkenhorst Patentanwälte PartGmbB
(86) International application number: PCT/RU2018/000246
(87) International publication number: WO 2018/199808

(57) **Abstract**

An aerodynamic surface of an aircraft comprises a main part having a leading and a trailing edges and having an airfoil section. The aerodynamic surface also having at least two vortex generators in the form of teeth having edges along the length thereof. The teeth are mounted on the leading edge of the main part so as to be capable of generating two vortex cores on one tooth. The edges of a tooth adjoin the leading edge of the main part of the aerodynamic surface. The radius of an edge of each tooth along the length of the vortex generator is five times less than the radius of the leading edge of the main part. The main part of the aerodynamic surface has a cambered airfoil section, wherein the teeth are mounted with a deflection towards the smallest degree of curvature of the airfoil section of the main part. The invention is intended for reducing an aerodynamic drag at low angles of attack while maintaining an increased load-bearing capacity of the aerodynamic surface by generating vortex cores adjoining one of the sides thereof.

## Description

### FIELD OF THE INVENTION

The invention relates to aircraft engineering, in particular to various aircrafts using fixed, moveable, rotating and flapping aerodynamic surfaces for creating aerodynamic forces and moments.

### BACKGROUND OF THE INVENTION

A horizontal empennage of a radio-controlled aerobatic model of the Ultimate AMR aircraft is known, produced by the Australian Precision Aerobatics company, photographs of which are available on the Internet at https://www.precisionaerobatics.com/product/ultimate-amr/ .

An aerodynamic surface of this model is made with at least two wedge-shaped teeth, each tooth having at least one sharpened incoming edge and mounted so as to be capable of generating vortex cores on the low-pressure side with an asymmetric flow around the aerodynamic surface. In fact, such aerodynamic surface is one of the options for implementing the horn balance of the elevator, in which the elevator part disposed in front of the elevator hinge fitting axis is made in the form of two triangular teeth, wherein the edges of the teeth that are beveled towards each other have sharp incoming edges gradually entering the flow with the formation of scissor-like cracks when the elevator is deflected from the neutral position by more than 5-7 degrees.

As a result, vortices are formed on the suction face of the elevator, suction zones of which spread throughout the elevator chord and thereby increase the maximum pitching moment M_{zmax} produced by the elevator, which allows this model to perform the most complex 3D aerobatic maneuvers, including rotation around the Z axis at a pace of at least 500 degrees per second, which is provided not least by the low damping pitching moment of a biplane cell when the rotation axis of the aircraft is located between the upper and lower wings.

A disadvantage of the known technical solution is, in particular, the impossibility to use a vortex-induced lift produced by the elevator teeth to increase a load-bearing capacity of the aerodynamic surfaces having a high aspect ratio.

Solutions structurally closer to the present invention include embodiments of a leading edge of an aerodynamic surface that provide an increased load-bearing capacity thereof by improving the energy transfer from the incoming flow to the boundary layer on the upper surface of the wing through the generation of vortex cores.

"Engine nacelle of an aircraft comprising a vortex generator arrangement" according to the application US 2010/0176249 A1 should be noted among such solutions. This vortex generator arrangement is fins having sharp working edges mounted on the sides of the turbofan engine nacelle of the aircraft, wherein the shape and disposition of the fins exclude an increased drag during cruise flight modes and provide generation of stable vortex cores adjoining the upper surface of the aircraft wing and increase the C_{y} of the wing by creating high-vacuum zones at increased angles of attack that are characteristic of take-off and landing modes.

Furthermore, the vortex cores adjoining the upper surface of the wing divide the longitudinally moving boundary layer on the upper surface of the wing into separate sections, which reduces the probability of migration of the lift-off areas of the boundary layer along the wingspan, which in turn increases the permissible roll angular rates at low airspeeds.

This technical solution is an example of the successful application of the effects of vortex aerodynamics to wings having a high aspect ratio.

A disadvantage of this technical solution is its relatively narrow field of use limited to aircrafts having underwing engines.

"Wing leading edge having vortex generators" according to US 7900871 B2 is also known. This wing includes triangular strakes disposed on the upper surface of the wing near the leading edge, wherein the height of the wedge-like ledges formed by the strakes and the upper surface of the wing is increased from the leading edge of the wing to the trailing one.

The disadvantage of such technical solution is an increased Cₓ of the wing at low angles of attack during cruise flight modes, since the vortex generators disposed on the upper surface of the wing behind the leading edge thereof can not be "turned off' due to their streamwise disposition at angles of attack corresponding to the cruise airspeed. This disadvantage partially eliminates the advantages in flight maneuverability and safety from the energy growth of the boundary layer at high angles of attack.

A wing having a body strake and drooped console leading edge, the wing used, in particular, on the F18A Super Hornet aircraft, can be given as an example of a fuller use of the advantages of the vortex lift.

An advantage of such wing is a capability of actively maneuvering the aircraft at angles of attack of the order of 35-40 degrees, which exceeds the critical angle of attack for a laminar-flow wing.

A disadvantage of this wing is the alternating-sign retrimming of the aircraft when an angle of attack is changed and at the same time the nonlinearity of the dependence of the aerodynamic center shift from the angle of attack is increased with an increase in the aerodynamic efficiency of the body strake, which is carried out by increasing the length thereof and sharpening the incoming edges, which requires application of high-speed fly-by-wire systems (FBWS) on the aircraft whose wing has a highly efficient and extended body strake. It is for this reason that the Mig 29 aircraft of the first series, not provided with an FBWS in the longitudinal axis, has a relatively short body strake with a blunted working edge, and the F18A Super Hornet provided with a high-speed FBWS has a long and sharp body strake. At the same time the most modern and perfect aircraft of the MiG-29 family, which is the MiG-35, is provided with an FBWS and also has a sharp incoming edge of the body strake. Nevertheless, it should be noted that problems with "vortex" retrimming when an angle of attack is changed are characteristic of only multi-mode aircrafts with a wing having a low aspect ratio, the maximum chord of which along the body strake base, as a rule, exceeds a half of the total length of the aircraft, and the all-moveable horizontal empennage is disposed almost immediately adjacent to the trailing edge of the wing.

"Wavy airfoil" is also known, described in the application US 2012/0061522 A1. This technical solution is intended for increasing a lift over drag ratio of the surface and a load-bearing capacity thereof at high angles of attack. The difference from the classical airfoil section is the presence of a three-dimensional wavy texture spreading spanwise the surface. Noise reduction is claimed as an additional advantage.

A disadvantage of this aerodynamic surface is a limited efficiency at high angles of attack, since the wavy leading edge, unlike the developed body strake of the wing, is not capable of forming sufficiently powerful vortices. Furthermore, the manufacturing complexity should be noted, since the wavy shape is given to the entire aerodynamic surface.

"Aircraft tail surface with a leading edge section of undulated shape" according to US 8789793 B2 is also known. This technical solution is intended for improving flight safety under adverse weather conditions, and namely for preventing accidents caused by icing of the leading edge of the horizontal empennage. Technically, this becomes possible owing to the fact that, according to experimental data, icing accretion is produced on the undulated surface of the leading edge on protrusion peaks and recesses bottoms thereof, leaving ice-free sections between them, through which the energy of the incoming flow can be imparted to the boundary layer of the aerodynamic surface, including by means of vortices formed on the edges of icy mounds, which in turn delays the stall from the horizontal empennage.

A disadvantage of such technical solution is a limited field of its use.

The MiG 23 MLD aircraft is also known, the aerodynamic features of which are described in SU 1840516 A1.

A wing of this aircraft comprises a main part having an airfoil section with a leading and a trailing edge, and also at least two vortex generators in the form of teeth having edges along the length thereof, wherein the teeth are mounted on the leading edge of the main part so as to be capable of generating two vortex cores on one tooth. The edges of a tooth adjoin the leading edge of the main part of the aerodynamic surface.

A disadvantage of the known aerodynamic surface is a low level of lateral damping, which expressed itself in the roll oscillations characteristic of the MiG-23 MLD within a particular range of angles of attack, as well as the deterioration of the lift over drag ratio of the wing due to the local shock waves in the recesses at the tooth bases.

A wing of a radio-controlled model of the Yak 54 35 cc aircraft developed by the Flex Innovations company is also known. Description and photos of the aircraft with this wing are available on the Internet at https://wiredrc.com.au/index.php/product/flex-innovations-qq-yak-54-35cc/.

This wing, in the aggregate of its design features, is closest to the aerodynamic surface corresponding to the present invention and comprises a main part having a leading and a trailing edge and having an airfoil section, and also at least two vortex generators in the form of teeth having edges along the length thereof, wherein the teeth are mounted on the leading edge of the main part so as to be capable of generating two vortex cores on one tooth, the edges of a tooth adjoin the leading edge of the main part of the aerodynamic surface, and the radius of an edge of each tooth along the length of the vortex generator is at least five times less than the radius of the leading edge of the main part.

The main part has an uncambered airfoil section due to the aerobatic specifics of this aircraft model. The teeth are grouped into two groups disposed in close proximity to the wingtips, are disposed strictly in the plane of the wing chord and have a relatively small size, in particular the tooth height does not exceed 5% of the local wing chord.

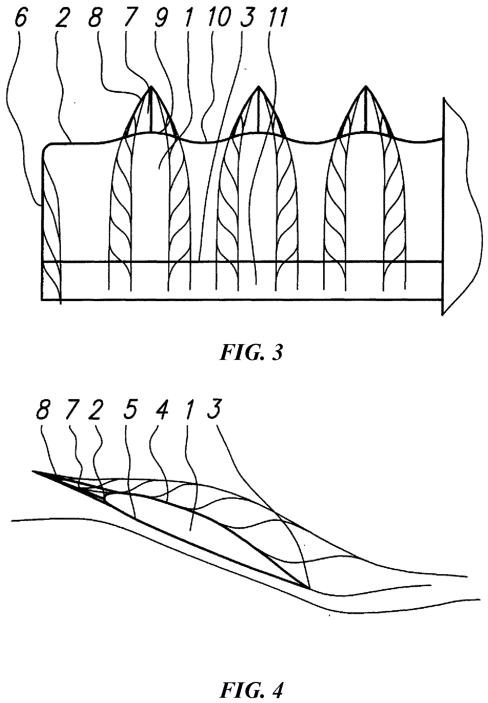

The main advantage of this technical solution is a sharp decrease in the tendency of the aircraft to the tip stall, which is achieved by increasing the energy of the boundary layer on the suction face near the wingtips by creating a vortex sheet, which slows down the accumulation of an inert and unstable boundary layer near the wingtips. This effect is illustrated in FIG. 3-6.

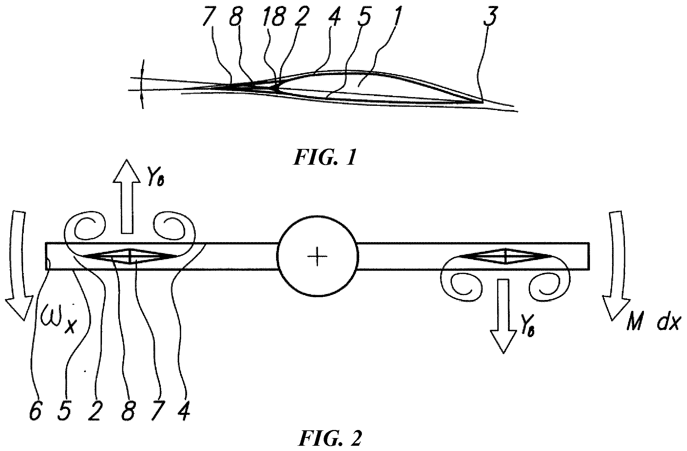

An additional advantage of the known technical solution is a high level of aerodynamic damping in the lateral axis, which can be explained by the fragmentation of the stagnation zone upstream of the leading edge of the wing into separate sections that are not capable of synchronous vibrations accompanied by the movement of the center of pressure. Furthermore, in the presence of a considerable roll angular rate and, correspondingly, an equally considerable difference in local angles of attack, the tooth groups generate diagonally disposed "damping" vortices, which tend to reduce the roll angular rate by applying suction to opposite wing surfaces. This effect is illustrated in FIG. 2.

Disadvantages of the known wing having teeth on the leading edge are the following:
- an increased drag due to the disposition of the edges of the vortex generator not streamwise at low positive angles of attack, which results in the impossibility to dispose the teeth along the entire length of the leading edge of the wing;
- deterioration of the lateral handling of the aircraft, in particular, as a result of the impossibility to achieve high roll angular rates due to the need to overcome the vortex damping moment by increasing the deflection angle or the flight control surface area, which makes it impossible to simultaneously improve the stall resistance and the aircraft sensitivity;
- an increased risk of injury when handling a known wing due to the presence of sharp teeth.

The main object of the invention is to develop a design of an aerodynamic surface, including a high aspect ratio, which has an increased load-bearing capacity at high angles of attack while minimizing the aerodynamic drag at low angles of attack.

Additional objects are the following:
- improving a load-bearing capacity of the laminar airfoil sections at high angles of attack;
- minimizing or eliminating a forward movement of the center of pressure with an increase in an angle of attack for flat-convex and concavo-convex foils, as well as providing a backward movement of the center of pressure for biconvex foils in order to increase an angle-of-attack and rate stability of the aircraft;
- qualitatively improving the aircraft damping in the lateral axis;
- providing a possibility of wide-range adjustment of the aerodynamic forces and moments produced by the surface.

An additional object was also to ensure a structural simplicity and reliability of the apparatus.

### SUMMARY OF THE INVENTION

These problems are solved by providing an aerodynamic surface of an aircraft comprising a main part having a leading and a trailing edge and having an airfoil section, and also at least two vortex generators in the form of teeth having edges along the length thereof, wherein the teeth are mounted on the leading edge of the main part so as to be capable of generating two vortex cores on one tooth, the edges of a tooth adjoin the leading edge of the main part of the aerodynamic surface, and the radius of an edge of each tooth along the length of the vortex generator is at least five times less than the radius of the leading edge of the main part.

According to the invention, the main part of the aerodynamic surface has a cambered airfoil section, wherein the teeth are mounted with a deflection towards the smallest degree of curvature of the airfoil section of the main part.

The implementation of the main part of the aerodynamic surface with a cambered airfoil section and the teeth deflected towards the smallest degree of curvature of the airfoil section leads to the fact that with an increased load-bearing capacity of the aerodynamic surface due to the generation of adjoining vortex cores by the teeth on one side thereof, a drag is decreased and a lift over drag ratio is increased at low positive angles of attack of the main part of the aerodynamic surface, since the teeth are disposed strictly streamwise and have a near-zero angle of attack.

Preferably, a ratio of the width of the tooth base to the height thereof is from 0.8 to 3, a ratio of the width of the tooth base to the distance between the teeth is from 1.6 to 3.5, and the height of the tooth is from 10 to 45% of a local chord of the main part of the aerodynamic surface.

Furthermore, the edges of the teeth are made sharpened by at least 50% of the length thereof.

The leading edge of the main part of the aerodynamic surface can be made wavy, wherein the teeth are disposed on the protrusions of the wavy surface of the leading edge, and the maximum foil difference of the wavy surface is from one twentieth to one third of the distance between the teeth. This allows further reducing the drag by decreasing flow deceleration in the area the tooth edge adjoining the leading edge of the main part.

Preferably, the aerodynamic surface further comprises at least one deflectable trailing edge assembly hingedly mounted on the trailing edge of the main part of the aerodynamic surface, and at least one of the teeth is configured to be deflected relative to the main part of the aerodynamic surface and is kinematically connected to the deflectable trailing edge assembly of the aerodynamic surface so as to be capable of being synchronously deflected relative to the main part of the aerodynamic surface, providing the creation of a total aerodynamic force or moment with the simultaneous aerodynamic compensation of a hinge moment of the movable trailing edge assembly owing to the hinge moment of said at least one of the teeth that is opposite in sign. This makes it possible to ensure a high efficiency of controlling the aerodynamic force created by such surface, since, simultaneously with subtracting the hinge moments of the deflectable trailing edge assembly and the tooth, the control moments produced by the deflectable trailing edge assembly and the tooth are added to the vortex aerodynamic force created on the main part by vortices generated by the tooth, which increases a gain of a control system.

Furthermore, the main part of the aerodynamic surface can be made in the form of a leading and a trailing aerodynamic member mounted one after another, wherein the teeth are mounted between the leading and trailing aerodynamic members, forming trapezoidal windows tapering in the air flow direction so as to be capable of generating vortex cores adjoining the surface of the trailing aerodynamic member. With such design of the aerodynamic surface, there is no vortex-lift increment on the leading aerodynamic member, which further increases the marginal angle-of-attack stability of the aircraft. In addition, when using such aerodynamic surface as a wing and a horizontal empennage, the probability of the teeth engaging branches and grass during take-offs and landings of the aircraft in places with dense vegetation cover is reduced, and the risk of injury when handling such wings or horizontal empennage is also reduced.

Peculiarities and advantages of the present invention will be better understood from the following description with reference to the drawings.

### BRIEF DESCRIPTION OF DRAWINGS

FIG. 1 schematically shows a behavior of the flow around the aerodynamic surface according to the invention at a low positive angle of attack, a lateral view;
FIG. 2 schematically shows a roll damping moment formation pattern in the known aerodynamic surface, a front view;
FIG. 3 schematically shows a behavior of the flow around the known aerodynamic surface at a considerable positive angle of attack, a top view;
FIG. 4 schematically shows a behavior of the flow around the known aerodynamic surface at a considerable positive angle of attack, a lateral view;
FIG. 5 schematically shows a suction distribution on the known aerodynamic surface at a considerable positive angle of attack, a lateral view;
FIG. 6 schematically shows a suction distribution on the known aerodynamic surface at a critically high positive angle of attack, a lateral view;
FIG. 7 shows a skeleton diagram of aerodynamic force control according to a second embodiment of the invention by means of joint deflection of the tooth and deflectable trailing edge assembly, a lateral view;
FIG. 8 schematically shows a behavior of the flow around the aerodynamic surface according to a third embodiment of the invention at a considerable positive angle of attack, a top view;
FIG. 9 schematically shows a behavior of the flow around the aerodynamic surface according to the third embodiment of the invention at a considerable positive angle of attack, a lateral view.

### EMBODIMENTS OF THE INVENTION

An aerodynamic surface of an aircraft according to the first embodiment of the invention shown in FIG. 1 is made in the form of a console and comprises a main part 1 having a cambered airfoil section, and having a leading edge 2, a trailing edge 3, an upper side 4, a lower side 5 and a tip 6. Vortex generators made in the form of teeth 7 having edges 8 disposed along the length of the teeth 7 are arranged on the leading edge 2. The teeth 7 are deflected towards the smallest degree of curvature of the airfoil section of the main part 1.

It is also possible to make the main part 1 with a wavy leading edge 2 (FIG. 3), which includes cyclically repeating protrusions 9 and recesses 10, wherein the teeth 7 are disposed on the protrusions 9.

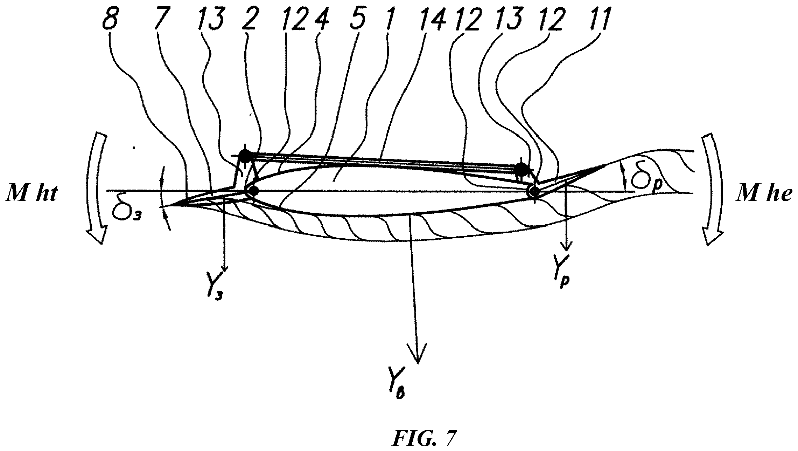

An aerodynamic surface of an aircraft according to the second embodiment of the invention shown in FIG. 7 is characterized by a movable mounting of the tooth or teeth 7 and the presence of a deflectable trailing edge assembly 11, wherein the tooth 7 and the deflectable trailing edge assembly 11 are mounted on the main part 1 by means of hinges 12 and are provided with pylons 13. The pylons 13 mounted on the teeth 7 are kinematically connected to the pylons 13 of the deflectable trailing edge assembly 11 by means of at least one linkage 14, wherein the main part 1, the pylons 13 and the linkage 14 form a parallel-link motion.

An aerodynamic surface of an aircraft according to the third embodiment of the invention is characterized by the implementation of the main part 1 in the form of a leading aerodynamic member 15 and a trailing aerodynamic member 16 disposed one after another. The teeth 7 are disposed in the gap between these aerodynamic members, forming trapezoidal windows 17 tapering in the flight direction. The side walls of the trapezoidal windows are the incoming edges 8.

The aerodynamic surface of the aircraft according to the first embodiment of the invention operates as follows.

At low positive angles of attack of the main part 1 of the aerodynamic surface 15, the teeth 7, due to their deflection towards the smallest degree of curvature of the airfoil section of the main part 1, are strictly streamwise and have a near-zero angle of attack (see FIG. 1), which reduces a drag and increases a lift over drag ratio, which is especially important with the laminar foil of the main part 1, the foil having a C_{ymax} shifted backwards. Furthermore, at near-zero angles of attack, the drag of the aerodynamic surface is further reduced owing to the disposition of the points of the edges 8 of the teeth 7 adjoining the leading edge 2 of the main part 1 in the stagnation zone of the flow 18 and owing to the sharpening of the edges 8 of the teeth 7.

In addition, the drag can be further reduced owing to the wavy foil of the leading edge 2, which reduces the flow deceleration in the area where the edge 8 adjoins the leading edge 2.

When the aerodynamic surface reaches high positive angles of attack, the pressure drop at the edges 8 creates conditions for the generation of vortex cores, the stability of which is increased with an increase in the Reynolds number, wherein the incoming flow energy spent for the generation of vortices is partially imparted to the boundary layer on the upper side 4 of the main part 1, which raises a C_{y} of the aerodynamic surface and increases an α crit. (see FIGS. 3 and 4).

In this case, a fraction of the vortex energy that has not been spent for maintaining the energy of the boundary layer and being lost during the shedding of the vortices from the upper side 4 of the main part 1 will be the greater, the greater the ratio of the height and the width of the tooth base 7 to the local chord of the main part 1 is, which determines the direction of optimization of this technical solution.

In experiments on models of aerodynamic surfaces, an α crit. for a wing having a relative height of the teeth of 5-25% of the local chord of the main part 1 has ranged from 35 to 40 degrees with a relative thickness of the foil of the main part 1 equal to 12% with an expressed backward movement of the center of pressure as the angle of attack is increased, which allows preliminary asserting the applicability of the proposed aerodynamic surface for use, for example, for the tail rotors of helicopters, whose operation often takes place under conditions of a small stall margin due to the summation of the control and compensating moments produced by the antitorque rotor.

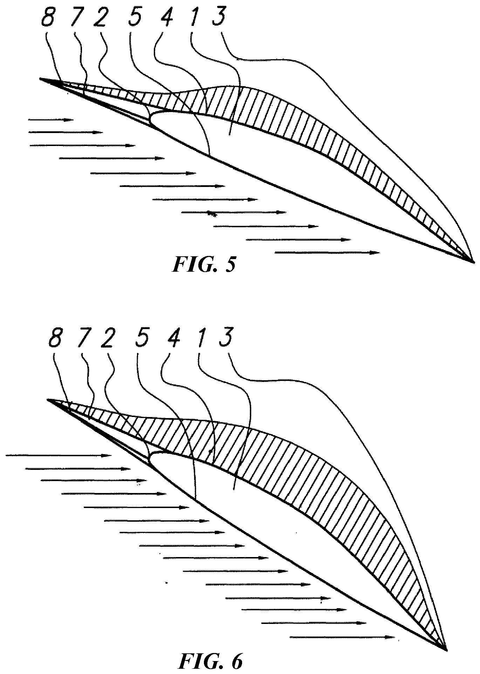

In this case, the backward movement of the center of pressure in the aerodynamic surface according to the invention is achieved due to the fact that as the angle of attack α is increased, the main part of the "vortex" suction increment falls at the middle and rear thirds of the upper side 4 of the main part 1, which compensates for the forward pressure redistribution on the lower side 5 of the main part 1 (see FIGS. 5 and 6).

The operation of the aerodynamic surface having a wavy leading edge 2, in the vortex generation mode, is characterized by a smaller Cₓ at high angles of attack due to the lower drag occurring when the vortex-type flow passes from the edge 8 to the upper side 4 of the main part 1, since the mounting of the teeth 7 on the protrusions 9 gives a local sweep angle to the leading edge 2 at the point of adjoining the edge 8.

The operation of the aerodynamic surface according to the second embodiment of the invention, the surface provided with the tooth 7 mounted on the hinge 12 and kinematically connected to the deflectable trailing edge assembly 11 by means of the linkage 14 and the pylons 13, is characterized by the possibility of highly efficient control over the aerodynamic force created by such surface, since, simultaneously with subtracting the hinge moments of the deflectable trailing edge assembly 11 and the tooth 7, which is equivalent to a conventional horn balance of the flight control surface, the control moments produced by the deflectable trailing edge assembly 11 and the tooth 7 are added to the vortex aerodynamic force generated on the main part 1 by the vortices generated by the tooth 7, which increases a gain of a control system (see FIG. 7).

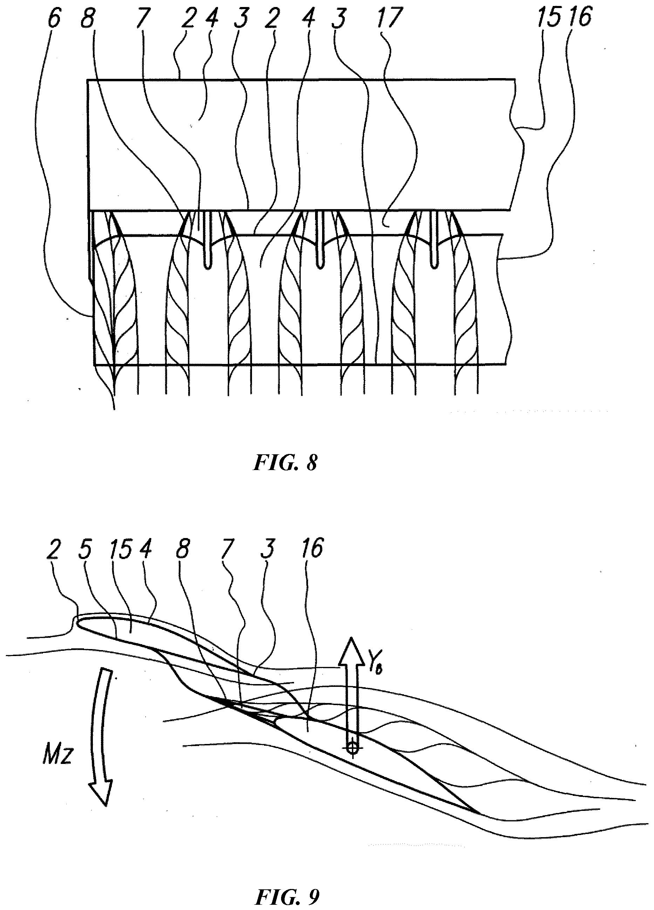

The operation of the aerodynamic surface according to the third embodiment of the invention, the main part of which is made in the form of leading and trailing aerodynamic members 15 and 16, is characterized in that the absence of a vortex-lift increment on the leading aerodynamic member 15 additionally increases the marginal angle-of-attack stability of the aircraft. Furthermore, when using such aerodynamic surface as a wing and a horizontal empennage, the probability of injuring people due to an accidental contact with the sharpened edges 8 is reduced (see FIGS. 8 and 9).

Thus, owing to the structural changes introduced into the known design of the aerodynamic surface having teeth on the leading edge, the following problems have been successfully solved:
- reducing a drag at low angles of attack;
- improving a resistance and sensitivity of an aircraft as well as increasing a gain in a control system of the aircraft;
- reducing an injury risk;
- improving an angle-of-attack stability.

Furthermore, owing to an increase in the energy of the boundary layer near the trailing edge, a forward movement of the center of pressure with an increase in an angle of attack has been excluded, which has improved the angle-of-attack and rate stability of the aircraft.

## Claims

1. An aerodynamic surface of an aircraft, comprising
a main part having a leading edge and a trailing edge and having an airfoil section;
at least two vortex generators in the form of teeth having edges along the length thereof, wherein the teeth are mounted on the leading edge of the main part so as to be capable of generating two vortex cores on one tooth, the edges of a tooth adjoin the leading edge of the main part of the aerodynamic surface, and the radius of an edge of each tooth along the length of the vortex generator is at least five times less than the radius of the leading edge of the main part,
**characterized in that** the main part of the aerodynamic surface has a cambered airfoil section, and the teeth are mounted with a deflection towards the smallest degree of curvature of the airfoil section of the main part.

2. The aerodynamic surface according to claim 1, **characterized in that**
a ratio of the width of the tooth base to the height thereof is from 0.8 to 3;
a ratio of the width of the tooth base to the distance between the teeth is from 1.6 to 3.5; and
the height of the tooth is equal to 10 - 45% of a local chord of the main part of the aerodynamic surface.

3. The aerodynamic surface according to claim 1, **characterized in that** the edges of the teeth are made sharpened by at least 50% of the length thereof.

4. The aerodynamic surface according to claim 1, **characterized in that** the leading edge of the main part of the aerodynamic surface is made wavy;
the teeth are disposed on the protrusions of the wavy surface of the leading edge; and
the maximum foil difference of the wavy surface is from one twentieth to one third of the distance between the teeth.

5. The aerodynamic surface according to claim 1, **characterized in that** it further comprises at least one deflectable trailing edge assembly hingedly mounted on the trailing edge of the main part of the aerodynamic surface, and at least one of the teeth is configured to be deflected relative to the main part of the aerodynamic surface and is kinematically connected to the deflectable trailing edge assembly of the aerodynamic surface so as to be capable of being synchronously deflected relative to the main part of the aerodynamic surface, providing the creation of a total aerodynamic force or moment with the simultaneous aerodynamic compensation of a hinge moment of the movable trailing edge assembly owing to the hinge moment of said at least one of the teeth that is opposite in sign.

6. The aerodynamic surface according to claim 1, **characterized in that** the main part of the aerodynamic surface is made in the form of a leading and a trailing aerodynamic member mounted one after another, and the teeth are mounted between the leading and trailing aerodynamic members, forming trapezoidal windows tapering in the air flow direction so as to be capable of generating vortex cores adjoining the surface of the trailing aerodynamic member.
